# EUROPÄISCHE PATENTSCHRIFT

(11) **EP 4 296 644 B1**
(45) Veröffentlichungstag und Bekanntmachung des Hinweises auf die Patenterteilung: **24.12.2025**
(21) Anmeldenummer: 23170079.0
(22) Anmeldetag: 26.04.2023
(51) Int. Cl.: G01L 19/06, G01L 19/00

(54) **DRUCKAUFNEHMER ZUM EINSATZ IN EINEM WASSERSTOFFHALTIGEN MEDIUM UND VERFAHREN ZUR FERTIGUNG EINES SOLCHEN DRUCKAUFNEHMERS**
PRESSURE SENSOR FOR USE IN A HYDROGEN-CONTAINING MEDIUM AND METHOD FOR PRODUCING SUCH A PRESSURE SENSOR
CAPTEUR DE PRESSION DESTINÉ À ÊTRE UTILISÉ DANS UN MILIEU CONTENANT DE L'HYDROGÈNE ET PROCÉDÉ DE FABRICATION D'UN TEL CAPTEUR DE PRESSION

(30) Priorität: 21.06.2022 EP 22180196
(43) Veröffentlichungstag der Anmeldung: 27.12.2023
(73) Patentinhaber: Kistler Holding AG, 8408 Winterthur (CH)
(72) Erfinder: Mastrogiacomo, Giovanni, 8005 Zürich (CH); Märki, Hans Beat, 8483 Kollbrunn (CH); Cadonau, Thomas, 9533 Kirchberg (CH); Buck, Reinhold, 8308 Illnau (CH)

(56) Entgegenhaltungen:
- US-A1- 2017 030 787
- US-B2- 8 943 895

## Beschreibung

### Technisches Gebiet

Die Erfindung betrifft einen Druckaufnehmer zum Einsatz in einem wasserstoffhaltigem Medium und ein Verfahren zur Fertigung eines solchen Druckaufnehmers nach der Definition der Oberbegriffe der unabhängigen Ansprüche.

### Stand der Technik

Ein Druckaufnehmer dient der Messung des Drucks eines flüssigen oder gasförmigen Mediums. Das Medium befindet sich in einer Messkammer. Zur Messung des Drucks wird der Druckaufnehmer an der Messkammer angeordnet. Der Druckaufnehmer weist Bauteile wie ein Gehäuse, eine Membran, ein Aufnehmerelement, usw. auf. Das Aufnehmerelement befindet sich im Inneren des Gehäuses. Gegenüber dem Medium verschliessen das Gehäuse und die Membran das Innere des Druckaufnehmers hermetisch dicht und schützen so das Aufnehmerelement vor dem direkten Einfluss des Mediums. Der Druck des Mediums wirkt über die Membran auf das Aufnehmerelement. Unter der Wirkung des Drucks erzeugt das Aufnehmerelement ein Messwert. Das Aufnehmerelement kann ein piezoresistives Aufnehmerelement mit einer Wheatstone-Brücke auf Siliziumbasis, ein piezoelektrisches Aufnehmerelement aus piezoelektrischem Material, ein Dehnungsmessstreifen mit einer Wheatstone-Brücke auf einem Metall- oder Kunststoffsubstrat, ein Dehnungsmessstreifen mit einer Wheatstone-Brücke auf einem Metall- oder Kunststoffsubstrat, usw. sein.

Im Einsatz ist der Druckaufnehmer oft rauen Messbedingungen ausgesetzt. Die rauen Messbedingungen kennzeichnen sich durch eine hohe Temperatur, chemisch aggressive Stoffe wie Wasserstoff, usw. Um auch bei rauen Messbedingungen eine lange Lebensdauer und volle Funktionsfähigkeit zu gewährleisten, sind die Bauteile des Druckaufnehmers, welche im direkten Kontakt mit dem Medium stehen, wie das Gehäuse, die Membran, usw. aus metallischem Werkstoff von hoher mechanischer Beständigkeit wie eine Eisenlegierung, eine Nickellegierung, eine Kobaltlegierung, usw.

In Verbrennungsmotoren, Turbinen, usw. ist der Druckaufnehmer dauerhaft einer hohen Temperatur von bis zu 350°C ausgesetzt. Bei einer solch hohen Temperatur machen sich Unterschiede zwischen den Wärmeausdehnungskoeffizienten der Bauteile des Druckaufnehmers nachteilig bemerkbar. Die unterschiedlichen Wärmeausdehnungskoeffizienten äussern sich als Temperatureinfluss auf den Nullwert (TK0) und als Temperatureinfluss auf den Kennwert (TKE). Beim TK0 erfolgt eine Nullpunktverschiebung, beim TKE findet eine Empfindlichkeitsänderung statt. Beide Effekte verfälschen den Messwert.

Typischerweise weist ein piezoresistives Aufnehmerelement bei einer Temperatur von bis zu 350°C einen Wärmeausdehnungskoeffizienten von 2.0*10⁻⁶ K⁻¹ auf, und ein piezoelektrisches Aufnehmerelement weist bei einer Temperatur von bis zu 350°c einen Wärmeausdehnungskoeffizienten von 7.5*10⁻⁶ K⁻¹ auf.

Für eine möglichst genaue Messung des Drucks bei einer Temperatur von bis zu 350°C sollen die Bauteile des Druckaufnehmers, welche im direkten Kontakt mit dem Medium stehen und aus metallischem Werkstoff sind, bei einer Temperatur von bis zu 350°C einen geringen Wärmeausdehnungskoeffizienten von kleiner/gleich 9.0*10⁻⁶ K⁻¹ aufweisen.

Bekannte metallische Werkstoffe mit einem so geringen Wärmeausdehnungskoeffizienten sind die Eisen-Nickel-Kobalt-Legierung der Werkstoffnummer 1.3981, welche im Temperaturbereich von 20 - 400°C einen mittleren Wärmeausdehnungskoeffizienten von 5.2*10⁻⁶ K⁻¹ aufweist und die Eisen-Nickel-Kobalt-Legierung der UNS-Nummer N19909, welche im Temperaturbereich von 20 - 450°C einen mittleren Wärmeausdehnungskoeffizienten von 7.7*10⁻⁶ K⁻¹ aufweist.

Sowohl die Eisen-Nickel-Kobalt-Legierung der Werkstoffnummer 1.3981 als auch die Eisen-Nickel-Kobalt-Legierung der UNS-Nummer N19909 weist einen hohen Gehalt an Nickel auf. Beide Legierungen haben daher ein austenitisches Gefüge mit mehrheitlich einer kubisch flächenzentrierten Kristallstruktur. Das austenitische Gefüge wird durch Warmumformung bei einer hohen Temperatur von rund 1100°C hergestellt und besitzt herstellungsbedingt einen mittleren Korndurchmesser von deutlich grösser 20µm.

Für eine hohe Empfindlichkeit bei der Messung des Drucks ist die Membran möglichst dünn. Die Membran setzt so der Einleitung der Kraft einen geringen Widerstand entgegen, sie verformt sich sehr leicht. Oft weist die Membran eine Dicke im Bereich von 40 - 150µm auf.

Aufgrund des mittleren Korndurchmessers von deutlich grösser 20µm eignen sich die austenitischen Gefüge der Eisen-Nickel-Kobalt-Legierung der Werkstoffnummer 1.3981 und der Eisen-Nickel-Kobalt-Legierung der UNS-Nummer N19909 nicht zur Fertigung einer Membran. Denn die Materialeigenschaften sind anisotrop, mit richtungsabhängigen Materialeigenschaften, was die strukturmechanische Auslegung der Membran durch Simulation der im Einsatz wirkenden Kräfte und Momente erschwert. Solche richtungsabhängigen Materialeigenschaften sind nur mit grossem Aufwand zu ermitteln und wenn man den Aufwand der Ermittlung scheut, ist die Simulation unbrauchbar. Für eine ausreichend hohe Festigkeit soll die Dicke der Membran mindestens das Achtfache des mittleren Korndurchmessers betragen.

Die Membran steht im direkten Kontakt mit dem Medium. Wenn das Medium wasserstoffhaltig ist, kann Wasserstoff in die Membran eindringen. Ein wasserstoffhaltiges Medium weist mindestens 1Vol% Wasserstoff auf. Besonders beim mittleren Korndurchmesser von deutlich grösser 20µm des austenitischen Gefüges der Eisen-Nickel-Kobalt-Legierung der Werkstoffnummer 1.3981 und der Eisen-Nickel-Kobalt-Legierung der UNS-Nummer N19909 kann Wasserstoff relativ einfach entlang der Korngrenzen ins Innere des Druckaufnehmers eindringen und sich im Inneren des Druckaufnehmers anreichern. Der eingedrungene Wasserstoff kann den Innendruck des Druckaufnehmers verändern und er kann chemisch mit dem Aufnehmerelement reagieren, was sich beides nachteilig auf die Funktionsfähigkeit des Druckaufnehmers auswirkt.

Es ist daher wünschenswert, dass der metallische Werkstoff der Membran eine verbesserte Beständigkeit gegenüber dem Eindringen und dem Anreichern von Wasserstoff im Inneren des Druckaufnehmers aufweist.

Eine erste Aufgabe der Erfindung ist es, einen Druckaufnehmer zur Messung des Drucks eines flüssigen oder gasförmigen Mediums bereitzustellen, welcher Druckaufnehmer eine Membran aus metallischem Werkstoff aufweist, welcher metallische Werkstoff bei einer Temperatur von bis zu 350°C einen Wärmeausdehnungskoeffizienten von kleiner/gleich 9.0*10⁻⁶ K⁻¹ aufweist, welches Medium wasserstoffhaltig ist, und welcher Werkstoff eine verbesserte Beständigkeit gegenüber Wasserstoff aufweist.

Und die Erfindung stellt sich die zweite Aufgabe, ein kostengünstiges Verfahren zur Fertigung eines solchen Druckaufnehmers aufzuzeigen.

### Darstellung der Erfindung

Die erste Aufgabe wird durch die Merkmale des ersten unabhängigen Anspruchs gelöst.

Die Erfindung betrifft einen Druckaufnehmer zur Messung des Drucks eines flüssigen oder gasförmigen Mediums, welches Medium wasserstoffhaltig ist und sich in einer Messkammer befindet; welcher Druckaufnehmer an der Messkammer angeordnet ist und bei der Messung dauerhaft einer Temperatur von bis zu 350°C ausgesetzt ist; welcher Druckaufnehmer eine Membran und ein Aufnehmerelement aufweist; wobei die Membran das Aufnehmerelement vor einem direkten Kontakt mit dem Medium schützt; wobei der Druck über die Membran auf das Aufnehmerelement wirkt und das Aufnehmerelement unter der Wirkung des Drucks einen Messwert erzeugt; wobei die Membran aus einem metallischen Werkstoff mit einem Wärmeausdehnungskoeffizienten von kleiner/gleich 9.0*10⁻⁶ K⁻¹ besteht; wobei ein mittlerer Korndurchmesser des metallischen Werkstoffs kleiner 20µm ist.

Kornfeinung führt in der Regel zu einer mechanischen Verfestigung des metallischen Werkstoffs. Bei der mechanischen Verfestigung findet eine plastische Verformung mit Versetzungen im Kristallgitter statt. Diese Versetzungen erleichtern das Eindringen von Wasserstoff in den metallischen Werkstoff und resultieren in einer Erhöhung der Wasserstoffkorrosionsrate. Wasserstoffkorrosion führt zu Wasserstoffversprödung, und Wasserstoffversprödung kann bei Belastung des metallischen Werkstoffs zu Sprödbruch führen. Aus diesem Grund wird üblicherweise bei mechanisch hochbelasteten Bauteilen wie der Membran eines Druckaufnehmers auf Kornfeinung verzichtet. Die Erfinder haben dennoch am metallischen Werkstoffs mit einem Wärmeausdehnungskoeffizienten von kleiner/gleich 9.0*10⁻⁶ K⁻¹ eine Kornfeinung vorgenommen und einen mittleren Korndurchmesser von deutlich kleiner 20µm erreicht. Die Kornfeinung ist das Ergebnis einer temperaturkontrollierten Warmumformung und Abkühlung des metallischen Werkstoffs. Der korngefeinte metallische Werkstoff erfüllt nicht nur die Anforderung an einen Wärmeausdehnungskoeffizienten von kleiner/gleich 9.0*10⁻⁶ K⁻¹, sondern auch die Anforderung an die Feinheit der Körnung für eine ausreichende mechanische Festigkeit einer dünnen Membran mit einer Membrandicke von kleiner/gleich 150µm.

Vorteilhafte Ausführungsformen der Erfindung werden in den abhängigen Ansprüchen beansprucht.

Der metallische Werkstoff der abhängigen Ansprüche 2 bis 4 ist ein austenitisches Gefüge einer Eisen-Nickel-Kobalt-Legierung der Werkstoffnummer 1.3981 oder einer Eisen-Nickel-Kobalt-Legierung der UNS-Nummer N19909. Das nichtfeingekörnte austenitische Gefüge der Eisen-Nickel-KobaltLegierung der Werkstoffnummer 1.3981 oder der Eisen-Nickel-Kobalt-Legierung der UNS-Nummer N19909 weist einen geringen Gehalt an Kohlenstoff und eine niedrige Wasserstoffkorrosionsrate auf. Bei solchen metallischen Werkstoffen mit geringem Gehalt an Kohlenstoff geht die Kornfeinung leider oft mit einer Erhöhung der Wasserstoffkorrosionsrate einher. Wasserstoffkorrosion führt zu Wasserstoffversprödung, und Wasserstoffversprödung kann bei Belastung des austenitischen Gefüges zu Sprödbruch führen. Überraschenderweise ist das aber nicht eingetreten. Auch das feingekörnte austenitische Gefüge dieser beiden Legierungen weist eine niedrige Wasserstoffkorrosionsrate auf.

Und dann weist die Membran aus feingekörntem austenitischen Gefüge der Eisen-Nickel-Kobalt-Legierung der Werkstoffnummer 1.3981 oder der Eisen-Nickel-Kobalt-Legierung der UNS-Nummer N19909 in ihrer Dicke eine deutlich grössere Anzahl von Korngrenzen als eine Membran des nichtfeingekörnten austenitischen Gefüges dieser beiden Legierungen. Die Anzahl von Korngrenzen hat sich rund verdoppelt. Die doppelt so grosse Anzahl von Korngrenzen erschwert das Eindringen des Wasserstoffs entlang der Korngrenzen in die Membran und somit auch das Eindringen des Wasserstoffs bis zum Druckaufnehmer und das Anreichern des Wasserstoffs beim Druckaufnehmer.

Die zweite Aufgabe wird durch die Merkmale des zweiten unabhängigen Anspruchs gelöst.

Die Erfindung betrifft auch ein Verfahren zur Fertigung eines Druckaufnehmer zur Messung des Drucks eines flüssigen oder gasförmigen Mediums, welches Medium wasserstoffhaltig ist und sich in einer Messkammer befindet; welcher Druckaufnehmer eine Membran und ein Aufnehmerelement aufweist, wobei der Druckaufnehmer dazu ausgebildet ist, im an der Messkammer angeordneten Zustand des Druckaufnehmers den Druck dauerhaft bei einer Temperatur von bis zu 350°C zu messen, das Aufnehmerelement durch die Membran vor einem direkten Kontakt mit dem Medium zu schützen und den Druck über die Membran auf das Aufnehmerelement einwirken zu lassen, welches Aufnehmerelement unter der Wirkung des Drucks einen Messwert erzeugt; mit den Schritten: Bereitstellung eines metallischen Werkstoffs mit einem Wärmeausdehnungskoeffizienten von kleiner/gleich 9.0*10⁻⁶ K⁻¹; Kornfeinung des metallischen Werkstoffs, wobei nach der Kornfeinung ein mittlerer Korndurchmesser des metallischen Werkstoffs kleiner 20µm ist; und Fertigung der Membran aus dem feingekörnten metallischen Werkstoff.

Der Druckaufnehmer wird also mit einer Membran aus feingekörntem metallischen Werkstoff gefertigt. Mit der Kornfeinung halbiert sich der mittlere Korndurchmesser des metallischen Werkstoffs um rund die Hälfte. Im Vergleich zum nichtfeingekörnten metallischen Werkstoff ist der feingekörnte metallische Werkstoff deutlich einfacher zu zerspanen. Bei der spanabhebenden Fertigung der Membran durch ein Werkzeug wird das Werkzeug entsprechend weniger abgenutzt und kann länger verwendet werden.

Gegenüber der Fertigung eines Druckaufnehmers unter Verwendung eines nichtfeingekörnten metallischen Werkstoffs für die Fertigung der Membran findet im erfindungsgemässen Verfahren mit der Kornfeinung des metallischen Werkstoffs zwar ein zusätzlicher Schritt statt, dafür ist aber die spanabhebende Fertigung der Membran durch Verwendung des feingekörnten metallischen Werkstoffs deutlich vereinfacht. Bei einer Gesamtbetrachtung von Aufwand und Kosten ist das erfinderische Verfahren im Vergleich wesentlich kostengünstiger.

Im Folgenden wird die Erfindung beispielhaft unter Beizug der Figuren näher erklärt.
- Fig. 1: zeigt schematisch im Querschnitt einen Teil einer ersten Ausführungsform des Druckaufnehmers 1 mit Frontdichtung über die Membran 12;
- Fig. 2: zeigt schematisch im Querschnitt einen Teil einer zweiten Ausführungsform des Druckaufnehmers 1 mit Frontdichtung über die Membran 12 und Beschichtung 18 der Membran 12;
- Fig. 3: zeigt schematisch im Querschnitt einen Teil einer dritten Ausführungsform des Druckaufnehmers 1 mit Schulterdichtung über das Gehäuse 11; und
- Fig. 4: zeigt schematisch im Querschnitt einen Teil einer vierten Ausführungsform des Druckaufnehmers 1 mit Schulterdichtung über das Gehäuse 11 und Beschichtung 18 von Gehäuse 11 und Membran 12.

Gleiche Bezugszeichen bezeichnen in den Figuren gleiche Gegenstände.

### Wege zur Ausführung der Erfindung

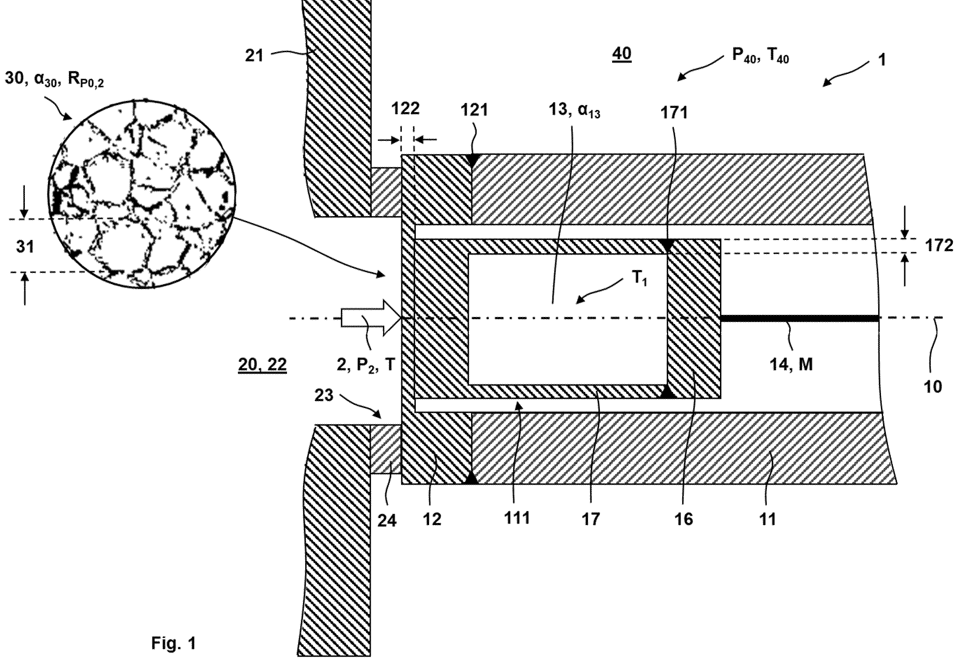

Der in vier Ausführungsformen gemäss Fig. 1 bis 4 schematisch dargestellte Druckaufnehmer 1 ist an einer Messkammer 20 angeordnet. Die Messkammer 20 kann eine Brennkammer eines Verbrennungsmotors, einer Turbine, usw. sein. In der Messkammer 20 befindet sich ein flüssiges oder gasförmiges Medium 2. Das Medium 2 weist einen Druck P₂ von bis zu 1000bar auf. Das Medium 2 weist eine Temperatur T₂ von bis zu 1000°C auf. Das Medium 2 ist wasserstoffhaltig. Unter einem wasserstoffhaltigem Medium 2 wird ein Medium 2 verstanden, welches mindestens 1Vol% Wasserstoff enthält. Der Wasserstoff kann molekular und/oder atomar vorliegen. Die Messkammer 20 weist eine Messkammerwand 21 auf. Die Messkammerwand 21 hält das Medium 2 vor einem Austreten in eine Umgebung 40 zurück. Die Umgebung 40 ist beispielsweise ein Maschinenraum, ein Prüfstand, usw. Die Umgebung 40 weist einen Druck P₄₀ von weitgehend 1bar und eine Temperatur T₄₀ von kleiner/gleich 80°C auf. Das Adjektiv "weitgehend" hat die Bedeutung "+/-25%".

Der Druckaufnehmer 1 befindet sich in der Umgebung 40. Der Druckaufnehmer 1 ist über eine Wandöffnung 22 in der Messkammerwand 21 an der Messkammer 20 angeordnet. Der Druckaufnehmer 1 weist ein Gehäuse 11 und eine Membran 12 auf. Das Gehäuse 11 und die Membran 12 bestehen aus metallischem Werkstoff 30 wie aus Eisenlegierungen, Nickellegierungen, Kobaltlegierungen, usw. Der metallische Werkstoff 30 ist mechanisch beständig. Das Gehäuse 11 und die Membran 12 werden nachfolgend auch als metallische Bauteile 11, 12 des Druckaufnehmers bezeichnet. Das Gehäuse 11 ist hohlzylinderförmig und weist ein Inneres 111 auf. Bezüglich einer Längsachse 10 weist das Gehäuse 11 eine dem Inneren 111 zugewandte Seite auf. Die Membran 12 ist scheibenförmig.

Im Bereich der Wandöffnung 22 steht der Druckaufnehmer 1 über die Membran 2 im Kontakt mit dem Medium 2. Bezüglich der Längsachse 10 des Druckaufnehmers 1 weist die Membran 12 einen radial äusseren Bereich und einen radial inneren Bereich auf. Entlang der Längsachse 10 weist die Membran 12 eine dem Medium 2 zugewandte Seite und eine dem Inneren 111 zugewandte Seite auf. Das Gehäuse 11 und die Membran 12 sind über einen Stoffschluss 121 miteinander verbunden. Vorteilhafterweise ist der Stoffschluss 121 eine ringförmige Schweissverbindung. Vorzugsweise erfolgt der Stoffschluss 121 im radial äusseren Bereich der Membran 12 mit dem Gehäuse 11. Das Gehäuse 11 und die Membran 12 verschliessen über den Stoffschluss 121 das Innere 111 des Gehäuses 11 hermetisch dicht gegenüber der Wandöffnung 22. Mit dem Begriff "hermetisch dicht" wird eine Leckrate gegenüber Helium von weniger als 10⁻⁶mbar*ls⁻¹ verstanden. Im radial inneren Bereich weist die Membran 12 eine Membrandicke 122 von kleiner/gleich 150µm auf.

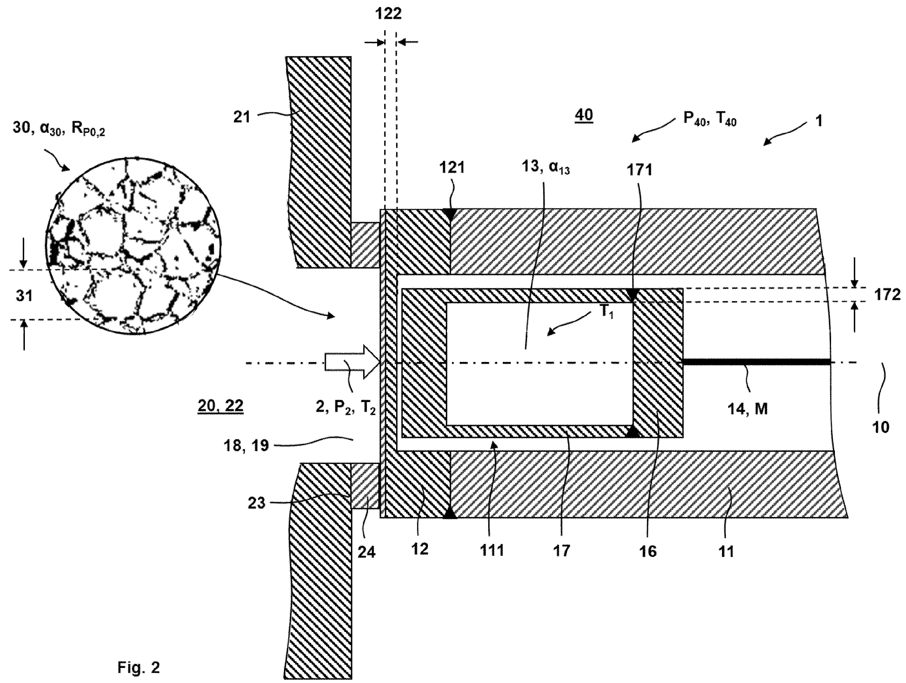

In der ersten und zweiten Ausführungsform des Druckaufnehmers 1 gemäss Fig. 1 und 2 steht der Druckaufnehmer 1 im Bereich der Wandöffnung 22 einzig über die Membran 12 im Kontakt mit dem Medium 2. Die Wandöffnung 22 ist gegenüber der Umgebung 40 durch eine Dichtfläche 23 in Form einer Frontdichtung verschlossen. Für die Frontdichtung wird ein Dichtungselement 24 verwendet. Das Dichtungselement 24 ist zwischen der Messkammerwand 21 und der Membran 12 angeordnet. Das Dichtungselement 24 liegt direkt auf dem radial äusseren Bereich der Membran 12 auf. Die Dichtfläche 23 verschliesst die Wandöffnung 22 hermetisch dicht gegenüber der Umgebung 40.

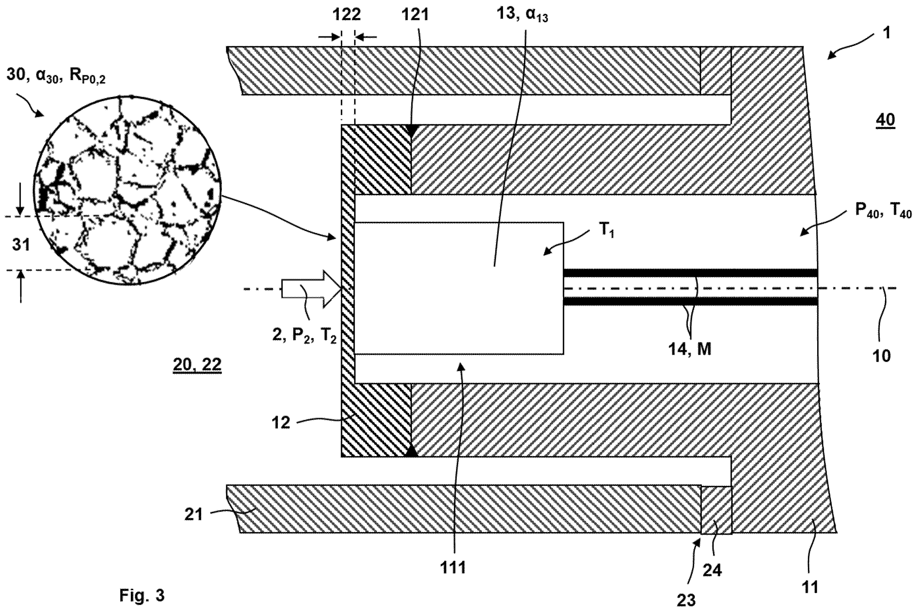

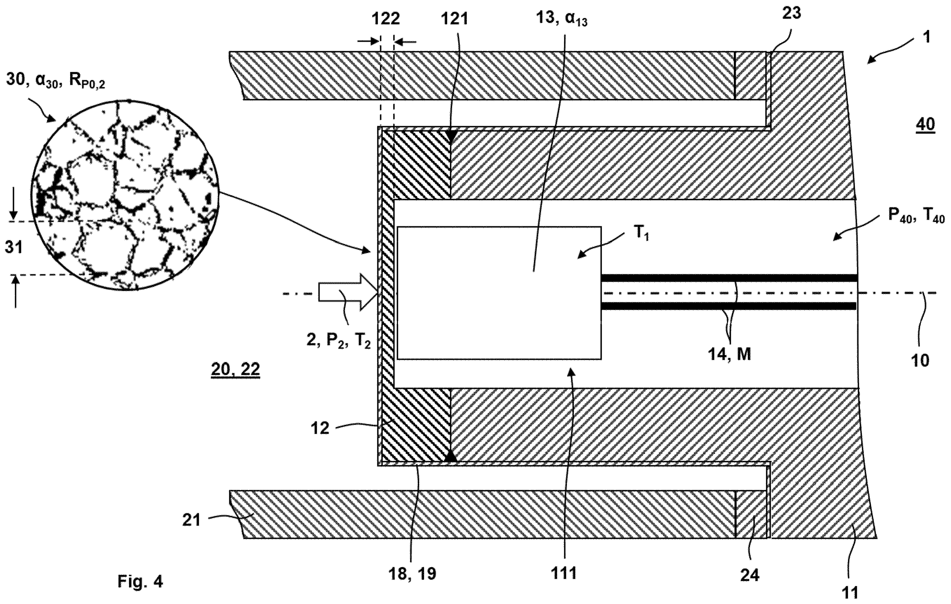

In der dritten und vierten Ausführungsform des Druckaufnehmers 1 gemäss Fig. 3 und 4 steht der Druckaufnehmer 1 im Bereich der Wandöffnung 22 über das Gehäuse 1 und über die Membran 12 im Kontakt mit dem Medium 2. Die Wandöffnung 22 ist gegenüber der Umgebung 40 durch eine Dichtfläche 23 in Form einer Schulterdichtung verschlossen. Für die Schulterdichtung wird ein Dichtungselement 24 verwendet. Das Dichtungselement 24 ist zwischen der Messkammerwand 21 und dem Gehäuse 11 angeordnet. Die Dichtfläche 23 verschliesst die Wandöffnung 22 hermetisch dicht gegenüber der Umgebung 40.

Vorzugsweise ist das Dichtungselement 24 ringförmig und besteht aus Weichmetall wie Kupfer, Aluminium, usw. oder aus einem Elastomer wie Fluor-Kautschuk, Ethylen-Propylen-Dien-Kautschuk, usw.

Der Druckaufnehmer 1 ist im Betrieb dauerhaft einer Temperatur T₁ von bis zu 350°C ausgesetzt. Der Druck P₂ und die Temperatur T₂ des Mediums 2 wirken direkt auf den radial inneren Bereich der Membran 12. Das Aufnehmerelement 13 befindet sich im Inneren 111 des Gehäuses 11. Somit sind insbesondere die Membran 2 und das Aufnehmerelement 13 im Betrieb dauerhaft einer Temperatur T₁ von bis zu 350°C ausgesetzt.

In den zwei Ausführungsformen gemäss Fig. 1 und 2 ist das Aufnehmerelement 13 zwischen einem Vorspannboden 16 und einer Vorspannhülse 17 vorgespannt. Der Vorspannboden 16 und die Vorspannhülse 17 bestehen aus metallischem Werkstoff 30 wie aus Eisenlegierungen, Nickellegierungen, Kobaltlegierungen, usw. Der metallische Werkstoff 30 ist mechanisch beständig. Der Vorspannboden 16 und die Vorspannhülse 17 werden nachfolgend auch als metallische Bauteile 16, 17 des Druckaufnehmers 1 bezeichnet. Die Vorspannhülse 17 weist eine Vorspannhülsendicke 172 von kleiner/gleich 150µm auf. Das vorgespannte Aufnehmerelement 13 ist auf der dem Inneren 111 zugewandten Seite der Membran 12 direkt hinter der Membran 12 angeordnet.

Zum Medium 2 hin weist die Membran 12 in einem radial inneren Bereich eine Oberfläche von konstanter Grösse auf. Der Druck P₂ des Mediums 2 wird über die Oberfläche als Kraft auf das Aufnehmerelement 13 eingeleitet. Dabei verformt sich die Membran 12. Das Aufnehmerelement 13 erzeugt unter der Wirkung des Drucks P₂ einen Messwert M. Der Messwert M wird über mindestens eine Messwertleitung 14 in die Umgebung abgeleitet.

Der Druckaufnehmer 1 ist entweder ein piezoresistiver Druckaufnehmer oder ein piezoelektrischer Druckaufnehmer. In der ersten und zweiten Ausführungsform des Druckaufnehmers 1 gemäss Fig. 1 und 2 ist der Druckaufnehmer 1 ein piezoelektrischer Druckaufnehmer. Der piezoelektrische Druckaufnehmer weist als Aufnehmerelement 13 ein piezoelektrisches Aufnehmerelement auf. Das piezoelektrische Aufnehmerelement besteht aus piezoelektrischem Material und der Messwert M ist eine elektrische Ladung.

In der dritten und vierten Ausführungsform des Druckaufnehmers 1 gemäss Fig. 3 und 4 ist der Druckaufnehmer 1 ein piezoresistiver Druckaufnehmer oder ein Aufnehmer von dehnenden und stauchenden Verformungen. Der piezoresistive Druckaufnehmer weist als Aufnehmerelement 13 ein piezoresistives Aufnehmerelement auf. Das piezoresistive Aufnehmerelement besteht aus einer Wheatstone-Brücke auf Siliziumbasis und der Messwert M ist eine elektrische Spannung. Der Aufnehmer von dehnenden und stauchenden Verformungen weist als Aufnehmerelement 13 einen Dehnungsmessstreifen mit einer Wheatstone-Brücke auf einem Metall- oder Kunststoffsubstrat auf und der Messwert M ist eine elektrische Spannung.

Vorzugsweise ist der metallische Werkstoff 30 ein austenitisches Gefüge mit mindestens 20Gew% Nickel mit einem mittleren Korndurchmesser 31 des Werkstoffs 30 kleiner 20µm. Nickel ist massgeblich für den geringen Wärmeausdehnungskoeffizienten des metallischen Werkstoffs 30. Im Vergleich zu austenitischen Gefügen mit weniger als 20Gew% Nickel, weist der metallische Werkstoff 30 aus austenitischem Gefüge mit mindestens 20Gew% Nickel einen geringen Wärmeausdehnungskoeffizienten α₃₀ von kleiner/gleich 9.0*10⁻⁶ K⁻¹ auf.

Vorzugsweise ist der metallische Werkstoff 30 eine Eisen-Nickel-Kobalt-Legierung der Werkstoffnummer 1.3981, welche einen mittleren Korndurchmesser 31 kleiner 20µm und im Temperaturbereich von 20 - 400°C einen mittleren Wärmeausdehnungskoeffizienten α₃₀ von 5.2*10⁻⁶ K⁻¹ aufweist. Dies hat den Vorteil, dass bei einer Temperatur T₁ des Druckaufnehmers 1 von bis zu 350°C der Wärmeausdehnungskoeffizient α₃₀ der Eisen-Nickel-Kobalt-Legierung der Werkstoffnummer 1.3981 ein wenig grösser als der sehr kleine Wärmeausdehnungskoeffizient α₁₃ von 2.0*10⁻⁶ K⁻¹ eines piezoresistives Aufnehmerelements und kleiner als der Wärmeausdehnungskoeffizient α₁₃ von 7.5*10⁻⁶ K⁻¹ eines piezoelektrischen Aufnehmerelements ist. Die Eisen-Nickel-Kobalt-Legierung der Werkstoffnummer 1.3981 lässt sich somit auch bei einer hohen Temperatur T₁ des Druckaufnehmers 1 von 350°C sowohl für einen Druckaufnehmer 1 mit piezoresistivem Aufnehmerelement als auch für einen Druckaufnehmer 1 mit piezoelektrischem Aufnehmerelement verwenden, ohne dass ein nachteiliger Unterschied zwischen der Wärmeausdehnung des mindestens einen metallischen Bauteils 11, 12, 16, 17 und der Wärmeausdehnung des Aufnehmerelements 13 auftritt.

Vorzugsweise ist der metallische Werkstoff 30 eine Eisen-Nickel-Kobalt-Legierung der UNS-Nummer N19909, welche einen mittleren Korndurchmesser 31 des Werkstoffs 30 kleiner 20µm und im Temperaturbereich von 20 - 450°C einen mittleren Wärmeausdehnungskoeffizienten von 7.7*10⁻⁶ K⁻¹ aufweist. Dies hat den Vorteil, dass bei einer Temperatur T₁ des Druckaufnehmers 1 von bis zu 350°C der Wärmeausdehnungskoeffizient α₃₀ der Eisen-Nickel-Kobalt-Legierung der UNS-Nummer N19909 weitgehend gleich gross wie der Wärmeausdehnungskoeffizient α₁₃ eines piezoelektrischen Aufnehmerelements von 7.5*10⁻⁶ K⁻¹ ist. Auf diese Weise tritt auch bei einer hohen Temperatur T₁ des Druckaufnehmers 1 von 350°C kein Unterschied zwischen der Wärmeausdehnung des mindestens einen metallischen Bauteils 11, 12, 16, 17 und der Wärmeausdehnung des piezoelektrischen Aufnehmerelements auf.

Vorzugsweise ist der metallische Werkstoff 30 eine Eisen-Nickel-Kobalt-Legierung der UNS-Nummer N19909 mit einem mittleren Korndurchmesser 31 des Werkstoffs 30 kleiner 20µm und mit einer Dehngrenze R_{P0,2} von grösser/gleich 1000MPa. Die Dehngrenze R_{P0,2} wird gemäss der Norm EN ISO 6892-1 bei einer Temperatur von 20°C ermittelt. Somit verformt sich das mindestens eine metallische Bauteil 11, 12, 16, 17 auch unter einem hohen Druck P₂ des Mediums 2 von bis zu 1000bar nicht plastisch, sondern nur elastisch. Durch das Vermeiden einer plastischen Verformung kann sich die Position der Membran 12 relativ zum Aufnehmerelement 13 nicht ändern und die Messung des Drucks P₂ verfälschen kann.

Die metallischen Bauteile 11, 12, 16 und 17 können aus metallischem Werkstoff 30 wie das austenitische Gefüge mit mindestens 20Gew% Nickel, die Eisen-Nickel-Kobalt-Legierung der Werkstoffnummer 1.3981 oder die Eisen-Nickel-Kobalt-Legierung der UNS-Nummer N19909 sein.

In der ersten und zweiten Ausführungsform des Druckaufnehmers 1 gemäss Fig. 1 und 2 steht der Druckaufnehmer 1 im Bereich der Wandöffnung 22 einzig über die Membran 12 im Kontakt mit dem Medium 2 und damit Wasserstoff des Mediums 2 erschwert ins Innere den Druckaufnehmers 1 eindringen und sich dort anreichern kann, ist zumindest der metallische Werkstoff 30 der Membran 12 aus einem austenitischen Gefüge mit mindestens 20Gew% Nickel, der Eisen-Nickel-Kobalt-Legierung der Werkstoffnummer 1.3981 oder der Eisen-Nickel-Kobalt-Legierung der UNS-Nummer N19909.

In der dritten und vierten Ausführungsform des Druckaufnehmers 1 gemäss Fig. 3 und 4 steht der Druckaufnehmer 1 im Bereich der Wandöffnung 22 über das Gehäuse 1 und über die Membran 12 im Kontakt mit dem Medium 2 und damit Wasserstoff des Mediums 2 erschwert ins Innere den Druckaufnehmers 1 eindringen und sich dort anreichern kann, sind zumindest der metallische Werkstoff 30 des Gehäuses 11 und der Membran 12 aus einem austenitischen Gefüge mit mindestens 20Gew% Nickel, der Eisen-Nickel-Kobalt-Legierung der Werkstoffnummer 1.3981 oder der Eisen-Nickel-Kobalt-Legierung der UNS-Nummer N19909.

In der zweiten und vierten Ausführungsform des Druckaufnehmers 1 gemäss der Fig. 2 und 4 weist die Membran 12 eine Beschichtung 18 auf. Die Beschichtung 18 verringert die Permeabilität der Membran 12 für Wasserstoff des Mediums 2. Vorzugsweise ist die Beschichtung 18 auf der dem Medium 2 zugewandten Seite der Membran 12 angebracht. Die Beschichtung 18 verhindert so einen direkten Kontakt der Membran 12 mit dem Medium 2. Somit kann Wasserstoff gar nicht erst zur Membran 12 gelangen.

Die Beschichtung 18 ist deutlich dünner als die Membrandicke 122. Vorzugsweise beträgt die Dicke der Beschichtung 18 maximal 10% der Membrandicke 122. Vorzugsweise beträgt die Dicke der Beschichtung 18 im Bereich von 1µm bis 5µm. Der Wärmeausdehnungskoeffizienten α₃₀ und die Dehngrenze R_{P0,2} des Druckaufnehmers 1 werden somit hauptsächlich durch den metallischen Werkstoff 30 des mindestens einen metallischen Bauteils 11, 12, 16, 17 bestimmt.

Die Beschichtung 18 weist Oxide, Carbide, Nitride, usw. auf. So kann die Beschichtung 18 Aluminiumoxid, Aluminiumcarbid, Aluminiumnitrid, Chromoxid, Chromnitrid, Erbiumoxid, Siliziumoxid, Siliziumcarbid, Siliziumnitrid, Titanoxid, Titancarbid, Titannitrid, Zirkoniumoxid, Carbide seltener Erden, Nitride seltener Erden, Oxide seltener Erden, usw. aufweisen.

Vorzugsweise besteht die Beschichtung 18 aus Aluminiumoxid. Aluminiumoxid ist in der Industrie als chemisch inerter Werkstoff bekannt. Zudem ist Aluminiumoxid gegenüber seltenen Erden oder Zirkonium vergleichsweise günstig. Im Gegensatz zu ebenfalls weitgehend chemisch inertem Gold mit einer Vickershärte unter 100HV10 weist Aluminiumoxid eine Vickershärte über 1500HV10 auf und weist damit als Beschichtung 18 des Werkstoffs 30 eine erhöhte mechanische Beständigkeit auf im Vergleich mit einer Beschichtung aus Gold. Unter Vickershärte wird die Vickershärte mit einer Prüfkraft von 10Kilopond, die sogenannte HV10, verstanden. Die Prüfung der Vickershärte ist in den Normen DIN EN ISO 6507-1:2018 bis DIN EN ISO 6507-4:2018 beschrieben.

Vorzugsweise besteht die Beschichtung 18 aus Titancarbid. Titancarbid findet industriell weite Verbreitung und ist als günstiger, weitgehend chemisch inerter Werkstoff bekannt. Titancarbid weist eine Vickershärte über 2500HV10 auf und weist damit als Beschichtung 18 des metallischen Werkstoffs 30 eine erhöhte mechanische Beständigkeit auf als vergleichsweise eine Beschichtung aus Gold.

Vorzugsweise weist die Membran 12 eine Haftvermittlerschicht 19 auf. Die Haftvermittlerschicht 19 ist zwischen dem metallischen Werkstoff 30 und der Beschichtung 18 angebracht. Dadurch werden temperaturinduzierte mechanische Spannungen auf eine erste Grenzschicht zwischen dem metallischen Werkstoff 30 und der Haftvermittlerschicht 19 und auf eine weitere Grenzschicht zwischen der Haftvermittlerschicht 19 und der Beschichtung 18 aufgeteilt. Temperaturinduzierte mechanische Spannungen werden somit erniedrigt und eine Delamination und Rissbildung der Beschichtung 18 des metallischen Werkstoffs 30 wird verhindert. Die Haftvermittlerschicht 19 ist ein Metall mit einer hohen Sauerstoffaffinität, wie ein Refraktärmetall, Aluminium, Metalle der seltenen Erden, usw. Refraktärmetalle sind Titan, Vanadium, Chrom, Zirkonium, Niob, Hafnium, Tantal, Molybdän, Wolfram, usw.

Vorzugsweise besteht die Haftvermittlerschicht 19 zumindest zu 90 Gew% aus Zirkonium oder Wolfram. Zirkonium oder Wolfram ist einfach als Schicht aufbringbar.

Vorzugsweise besteht die Beschichtung 18 aus nicht-stöchiometrischem Aluminiumoxid (1-y)Al-yAlOₓ (mit 0 < x <= 1.5 und 0 <= y <= 1). Der Wärmeausdehnungskoeffizient α₁₈ einer Beschichtung 18 aus nicht-stöchiometrischem Aluminiumoxid ist einstellbar. Vorzugsweise liegt der Wärmeausdehnungskoeffizient der Beschichtung 18 weitgehend beim Wärmeausdehnungskoeffizienten α₃₀ des metallischen Werkstoffs 30. Dies verhindert eine Delamination und Rissbildung in der Beschichtung 18 bei thermischer Beanspruchung. Eine Haftvermittlerschicht ist dann nicht nötig.

Vorzugsweise weist die Beschichtung 18 aus nicht-stöchiometrischem Aluminiumoxid (1-y)Al-yAlOx (mit 0 < x <= 1.5 und 0 <= y <= 1) einen Gradienten innerhalb der Beschichtung 18 auf. Der Anteil y nimmt innerhalb der Beschichtung 18 mit zunehmenden Abstand vom metallischen Werkstoff 30 graduell zu und auch der Anteil x nimmt innerhalb der Beschichtung 18 mit zunehmenden Abstand vom metallischen Werkstoff 30 graduell zu.

Vorzugsweise weist die Beschichtung 18 aus nicht-stöchiometrischem Aluminiumoxid (1-y)Al-yAlOx (mit 0 < x <= 1.5 und 0 <= y <= 1) einen Gradienten innerhalb der Beschichtung 18 auf, bei dem der Anteil y in einem definierten Abstand vom Werkstoff 30 gleich 1 und bei dem auch der Anteil x in einem definierten Abstand vom metallischen Werkstoff 30 gleich 1.5 wird und das nicht-stöchiometrische Aluminiumoxid in stöchiometrisches Al₂O₃ übergeht.

### Bezugszeichenliste

- 1: Druckaufnehmer
- 2: Medium
- 10: Längsachse
- 11: Gehäuse
- 12: Membran
- 13: Aufnehmerelement
- 14: Messwertleitung
- 16: Vorspannboden
- 17: Vorspannhülse
- 18: Beschichtung
- 19: Haftvermittler
- 20: Messkammer
- 21: Messkammerwand
- 22: Wandöffnung
- 23: Dichtfläche
- 24: Dichtungselement
- 30: metallischer Werkstoff
- 31: mittlerer Korndurchmesser
- 40: Umgebung
- 111: Innere
- 121: Stoffschluss
- 122: Membrandicke
- 171: Stoffschluss
- 172: Vorspannhülsendicke
- α₁₃, α₁₈, α₃₀: Wärmeausdehungskoeffizient
- M: Messwert
- P₂, P₄₀: Druck
- R_{P0,2}: Dehngrenze
- T₁, T₂, T₄₀: Temperatur

## Patentansprüche

1. Druckaufnehmer (1) zur Messung des Drucks (P₂) eines flüssigen oder gasförmigen Mediums (2), welches Medium (2) sich in einer Messkammer (20) befindet; welcher Druckaufnehmer (1) an der Messkammer (20) angeordnet ist und bei der Messung dauerhaft einer Temperatur (T₁) von bis zu 350°C ausgesetzt ist; welcher Druckaufnehmer (1) eine Membran (12) und ein Aufnehmerelement (13) aufweist; wobei die Membran (12) das Aufnehmerelement (13) vor einem direkten Kontakt mit dem Medium (2) schützt; wobei der Druck (P₂) über die Membran (12) auf das Aufnehmerelement (13) wirkt und das Aufnehmerelement (13) unter der Wirkung des Drucks (P₂) einen Messwert (M) erzeugt; **dadurch gekennzeichnet, dass** das Medium (2) wasserstoffhaltig ist; dass die Membran (12) aus einem metallischen Werkstoff (30) mit einem Wärmeausdehnungskoeffizienten (α₃₀) von kleiner/gleich 9.0*10⁻⁶ K⁻¹ besteht; und dass ein mittlerer Korndurchmesser (31) des metallischen Werkstoffs (30) kleiner 20µm ist.

2. Druckaufnehmer (1) gemäss Anspruch 1, **dadurch gekennzeichnet, dass** der metallische Werkstoff (30) ein austenitisches Gefüge mit mindestens 20Gew% Nickel ist.

3. Druckaufnehmer (1) gemäss einem der Ansprüche 1 oder 2, **dadurch gekennzeichnet, dass** der metallische Werkstoff (30) eine Eisen-Nickel-Kobalt-Legierung der Werkstoffnummer 1.3981 ist und im Temperaturbereich von 20 - 400°C einen mittleren Wärmeausdehnungskoeffizienten (α₃₀) von 5.2*10⁻⁶ K⁻¹ aufweist.

4. Druckaufnehmer (1) gemäss einem der Ansprüche 1 oder 2, **dadurch gekennzeichnet, dass** der metallische Werkstoff (30) die Eisen-Nickel-Kobalt-Legierung der UNS-Nummer N19909 ist und im Temperaturbereich von 20 - 450°C einen mittleren Wärmeausdehnungskoeffizienten (α₃₀) von 7.7*10⁻⁶ K⁻¹ aufweist.

5. Druckaufnehmer (1) gemäss einem der Ansprüche 1, 2 oder 4, **dadurch gekennzeichnet, dass** der metallische Werkstoff (30) eine Eisen-Nickel-Kobalt-Legierung der UNS-Nummer N19909 ist und eine Dehngrenze (R_{P0,2}) von grösser/gleich 1000MPa aufweist.

6. Druckaufnehmer (1) gemäss einem der Ansprüche 1 bis 5, **dadurch gekennzeichnet, dass** die Messkammer (20) eine Messkammerwand (21) aufweist; dass der Druckaufnehmer (1) in einer Wandöffnung (22) der Messkammerwand (21) angeordnet ist; dass das Medium (2) einen Druck (P₂) von bis zu 1000bar aufweist; dass sich der Druckaufnehmer (1) in einer Umgebung (40) mit einem Umgebungsdruck (P₄₀) von weitgehend 1bar befindet; dass der Druckaufnehmer (1) ein Gehäuse (11) aufweist; dass das Gehäuse (11) und die Membran (12) über einen Stoffschluss (121) miteinander verbunden sind; und dass das Gehäuse (11) und die Membran (12) über den Stoffschluss (121) ein Inneres (111) des Gehäuses (11) hermetisch dicht gegenüber der Wandöffnung (22) verschliessen, in welchem Inneren (111) das Aufnehmerelement (13) angeordnet ist.

7. Druckaufnehmer (1) gemäss Anspruch 6, **dadurch gekennzeichnet, dass** der Druckaufnehmer (1) im Bereich der Wandöffnung (22) einzig über die Membran (12) im Kontakt mit dem Medium (2) steht.

8. Druckaufnehmer (1) gemäss Anspruch 7, **dadurch gekennzeichnet, dass** eine Dichtfläche (23) die Wandöffnung (22) hermetisch dicht gegenüber der Umgebung (40) verschliesst; und dass die Dichtfläche (23) zwischen der Messkammerwand (21) und der Membran (12) angeordnet ist.

9. Druckaufnehmer (1) gemäss Anspruch 6, **dadurch gekennzeichnet, dass** der Druckaufnehmer (1) im Bereich der Wandöffnung (22) über das Gehäuse (11) und über die Membran (12) im Kontakt mit dem Medium (2) steht und sowohl das Gehäuse (11) als auch die Membran (12) aus dem metallischen Werkstoff (30) sind.

10. Druckaufnehmer (1) gemäss Anspruch 9, **dadurch gekennzeichnet, dass** eine Dichtfläche (23) die Wandöffnung (22) hermetisch dicht gegenüber der Umgebung (40) verschliesst; und dass die Dichtfläche (23) zwischen der Messkammerwand (21) und dem Gehäuse (11) angeordnet ist.

11. Druckaufnehmer (1) gemäss einem der Ansprüche 6 bis 10, **dadurch gekennzeichnet, dass** die Membran (12) eine Membrandicke (122) von kleiner/gleich 150µm aufweist; dass die Membrandicke (122) mehr als das Achtfache des mittleren Korndurchmessers (31) des metallischen Werkstoffs (30) beträgt; und dass eine Membrandicke (122), welche mehr als das Achtfache des mittleren Korndurchmessers (31) des metallischen Werkstoffs (30) beträgt, ein Eindringen von Wasserstoff des Mediums (2) ins Innere (111) des Gehäuses (11) und das Anreichern von Wasserstoff im Innern (111) des Gehäuses (11) erschwert.

12. Druckaufnehmer (1) gemäss einem der Ansprüche 1 bis 11, **dadurch gekennzeichnet, dass** das Gehäuse (11) und/oder die Membran (12) eine Beschichtung (18) zur Verringerung der Permeabilität für Wasserstoff des Mediums (2) aufweist, welche Beschichtung (18) Aluminiumoxid oder Titancarbid aufweist.

13. Druckaufnehmer (1) gemäss Anspruch 12, **dadurch gekennzeichnet, dass** die Membran (12) eine Haftvermittlerschicht (19) aufweist, welche Haftvermittlerschicht (19) zwischen dem metallischen Werkstoff (30) der Membran (12) und der Beschichtung (18) angebracht ist.

14. Druckaufnehmer (1) gemäss einem der Ansprüche 1 bis 13, **dadurch gekennzeichnet, dass** das Aufnehmerelement (13) zwischen einem Vorspannboden (16) und einer Vorspannhülse (17) vorgespannt ist; und dass der Vorspannboden (16) und die Vorspannhülse (17) aus dem metallischen Werkstoff (30) bestehen.

15. Verfahren zur Fertigung eines Druckaufnehmer (1) zur Messung des Drucks (P₂) eines flüssigen oder gasförmigen Mediums (2), welches Medium (2) sich in einer Messkammer (20) befindet; welcher Druckaufnehmer (1) eine Membran (12) und ein Aufnehmerelement (13) aufweist, wobei der Druckaufnehmer (1) dazu ausgebildet ist, im an der Messkammer (20) angeordneten Zustand des Druckaufnehmers (1) den Druck (P₂) dauerhaft bei einer Temperatur (T₁) von bis zu 350°C zu messen, das Aufnehmerelement (13) durch die Membran (12) vor einem direkten Kontakt mit dem Medium (2) zu schützen und den Druck (P₂) über die Membran (12) auf das Aufnehmerelement (13) einwirken zu lassen, welches Aufnehmerelement (13) unter der Wirkung des Drucks (P₂) einen Messwert (M) erzeugt; **gekennzeichnet durch**
ein wasserstoffhaltiges Medium (2)
mit den Schritten:
Bereitstellung eines metallischen Werkstoffs (30) mit einem Wärmeausdehnungskoeffizienten (α₃₀) von kleiner/gleich 9.0*10⁻⁶ K⁻¹;
Kornfeinung des metallischen Werkstoffs (30), wobei nach der Kornfeinung ein mittlerer Korndurchmesser (31) des Werkstoffs (30) kleiner 20µm ist; und
Fertigung der Membran (12) aus dem feingekörnten metallischen Werkstoff (30).

## Claims

1. Pressure transducer (1) for measuring the pressure (P₂) of a liquid or gaseous medium (2), which medium (2) is located in a measuring chamber (20); which pressure transducer (1) is arranged on the measuring chamber (20) and is permanently exposed to a temperature (T₁) of up to 350°C during the measurement; which pressure transducer (1) has a diaphragm (12) and a transducer element (13); wherein the diaphragm (12) protects the transducer element (13) from direct contact with the medium (2); wherein the pressure (P₂) acts on the transducer element (13) via the diaphragm (12) and the transducer element (13) generates a measured value (M) under the effect of the pressure (P₂); **characterized in that** the medium (2) contains hydrogen; **in that** the diaphragm (12) is made of a metallic material (30) having a coefficient of thermal expansion (α₃₀) of less than/equal to 9.0*10⁻⁶ K⁻¹; and **in that** an average grain diameter (31) of the metallic material (30) is smaller than 20µm.

2. Pressure transducer (1) according to claim 1, **characterized in that** the metallic material (30) is an austenitic structure with at least 20 wt.% nickel.

3. Pressure transducer (1) according to any of the claims 1 or 2, **characterized in that** the metallic material (30) is an iron-nickel-cobalt alloy of material number 1.3981 and has an average coefficient of thermal expansion (α₃₀) of 5.2*10⁻⁶ K⁻¹ in the temperature range of 20 - 400°C.

4. Pressure transducer (1) according to any of the claims 1 or 2, **characterized in that** the metallic material (30) is the iron-nickel-cobalt alloy of UNS number N19909 and has an average coefficient of thermal expansion (α₃₀) of 7.7*10⁻⁶ K⁻¹ in the temperature range of 20 - 450°C.

5. Pressure transducer (1) according to any of the claims 1, 2 or 4, **characterized in that** the metallic material (30) is an iron-nickel-cobalt alloy of UNS number N19909 and has a yield strength (R_{P0,2}) of greater than/equal to 1000MPa.

6. Pressure transducer (1) according to any of the claims 1 to 5, **characterized in that** the measuring chamber (20) comprises a measuring chamber wall (21); **in that** the pressure transducer (1) is arranged in a wall opening (22) of the measuring chamber wall (21); **in that** the medium (2) exhibits a pressure (P₂) of up to 1000bar; **in that** the pressure transducer (1) is located in an environment (40) with an ambient pressure (P40) of largely 1bar; **in that** the pressure transducer (1) comprises a housing (11); **in that** the housing (11) and the diaphragm (12) are connected with each other via a material closure (121); and **in that** the housing (11) and the diaphragm (12) seal an interior (111) of the housing (11) in a hermetically sealed manner with respect to the wall opening (22) via the material closure (121), in which interior (111) the transducer element (13) is arranged.

7. Pressure transducer (1) according to claim 6, **characterized in that** the pressure transducer (1) is in contact with the medium (2) in the region of the wall opening (22) solely via the diaphragm (12) and at least the diaphragm (12) is made of the metallic material (30).

8. Pressure transducer (1) according to claim 7, **characterized in that** a sealing surface (23) closes the wall opening (22) hermetically with respect to the environment (40); and **in that** the sealing surface (23) is arranged between the measuring chamber wall (21) and the diaphragm (12).

9. Pressure transducer (1) according to claim 6, **characterized in that** the pressure transducer (1) is in contact with the medium (2) in the region of the wall opening (22) via the housing (11) and via the diaphragm (12), and both the housing (11) and the diaphragm (12) are made of the metallic material (30).

10. Pressure transducer (1) according to claim 9, **characterized in that** a sealing surface (23) hermetically seals the wall opening (22) from the environment (40); and **in that** the sealing surface (23) is arranged between the measuring chamber wall (21) and the housing (11).

11. Pressure transducer (1) according to any of the claims 6 to 10, **characterized in that** the diaphragm (12) has a diaphragm thickness (122) of less than/equal to 150µm; and **in that** the diaphragm thickness (122) is more than eight times the mean grain diameter (31) of the metallic material (30) and **in that** a diaphragm thickness (122), which is more than eight times the mean grain diameter (31) of the metallic material (30) makes it difficult for hydrogen of the medium (2) to penetrate into the interior (111) of the housing (11) and for hydrogen to accumulate in the interior (111) of the housing (11).

12. Pressure transducer (1) according to any of the claims 1 to 11, **characterized in that** the housing (11) and/or the diaphragm (12) has a coating (18) for reducing the permeability to hydrogen of the medium (2), which coating (18) comprises aluminum oxide or titanium carbide.

13. Pressure transducer (1) according to claim 12, **characterized in that** the diaphragm (12) has an adhesion promoter layer (19), which adhesion promoter layer (19) is applied between the metallic material (30) of the diaphragm (12) and the coating (18).

14. Pressure transducer (1) according to any of the claims 1 to 13, **characterized in that** the transducer element (13) is prestressed between a preload base (16) and a preload sleeve (17); and **in that** the preload base (16) and the preload sleeve (17) consist of the metallic material (30).

15. Method of manufacturing a pressure transducer (1) for measuring the pressure (P₂) of a liquid or gaseous medium (2), which medium (2) is located in a measuring chamber (20); which pressure transducer (1) comprises a diaphragm (12) and a transducer element (13), the pressure transducer (1) being designed to measure the pressure (P₂) continuously at a temperature (T₁) of up to 350°C in the state of the pressure transducer (1) arranged at the measuring chamber (20), protecting the transducer element (13) from direct contact with the medium (2) by means of the diaphragm (12) and allowing the pressure (P₂) to act on the transducer element (13) via the diaphragm (12), which transducer element (13) generates a measured value (M) under the effect of the pressure (P₂); **characterized by** a medium (2) that contains hydrogen comprising the steps of: providing a metallic material (30) having a coefficient of thermal expansion (α₃₀) of less than or equal to 9.0*10⁻⁶ K⁻¹; grain refining the metallic material (30), wherein after grain refining an average grain diameter (31) of the material (30) is less than 20um; and manufacturing the diaphragm (12) from the finely grained metallic material (30).

## Revendications

1. Capteur de pression (1) pour mesurer la pression (P₂) d'un milieu liquide ou gazeux (2), lequel milieu (2) se trouve dans une chambre de mesure (20) ; dans lequel ledit capteur de pression (1) est disposé sur la chambre de mesure (20) et exposé pendant la mesure en permanence à une température (T₁) jusqu'à un maximum de 350 °C ; lequel capteur de pression (1) comprend un diaphragme (12) et un élément capteur (13) ; dans lequel le diaphragme (12) protège l'élément capteur (13) contre un contact direct avec ledit milieu (2) ; dans lequel la pression (P₂) agisse sur l'élément capteur (13) via le diaphragme (12) et, sous l'effet de la pression (P₂), l'élément capteur (13) génère une valeur de mesure (M) ; **caractérisé en ce que** le milieu (2) contient de l'hydrogène et **en ce que** le diaphragme (12) est d'un matériau métallique (30) ayant un coefficient de dilatation thermique (α₃₀) inférieur/égal à 9,0*10⁻⁶ K⁻¹ ; et **en ce qu'**un diamètre moyen des grains (31) du matériau métallique (30) est inférieur à 20 µm.

2. Capteur de pression (1) selon la revendication 1, **caractérisé en ce que** le matériau métallique (30) est une structure austénitique contenant au moins 20 % en poids de nickel.

3. Capteur de pression (1) selon l'une quelconque des revendications 1 ou 2, **caractérisé en ce que** le matériau métallique (30) est un alliage de fer-nickel-cobalt de numéro de matériau 1.3981 et présente un coefficient moyen de dilatation thermique (α₃₀) égal à 5,2*10⁻⁶ K⁻¹ dans la plage de températures de 20 à 400 °C.

4. Capteur de pression (1) selon l'une quelconque des revendications 1 ou 2, **caractérisé en ce que** le matériau métallique (30) est l'alliage de fer-nickel-cobalt de numéro UNS N19909 et présente un coefficient moyen de dilatation thermique (α₃₀) égal à 7,7*10⁻⁶ K⁻¹ dans la plage de températures de 20 à 450 °C.

5. Capteur de pression (1) selon l'une quelconque des revendications 1, 2 ou 4, **caractérisé en ce que** le matériau métallique (30) est un alliage de fer-nickel-cobalt de numéro UNS N19909 et présente une limite d'élasticité (R_{P0,2}) supérieure/égale à 1000 MPa.

6. Capteur de pression (1) selon l'une quelconque des revendications 1 à 5, **caractérisé en ce que** la chambre de mesure (20) comprend une paroi de chambre de mesure (21) ; **en ce que** le capteur de pression (1) est disposé dans un orifice de paroi (22) de la paroi de chambre de mesure (21) ; **en ce que** le milieu (2) a une pression (P₂) jusqu'à 1000 bar ; **en ce que** le capteur de pression (1) est situé dans un environnement (40) dont la pression ambiante (P₄₀) est substantiellement supérieure à 1 bar ; **en ce que** le capteur de pression (1) comprend un boîtier (11) ; **en ce que** le boîtier (11) et le diaphragme (12) sont reliés l'un à l'autre par une liaison entre des matériaux (121) ; et **en ce que**, par l'intermédiaire de ladite liaison entre des matériaux (121), le boîtier (11) et le diaphragme (12) obturent de manière hermétiquement étanche un intérieur (111) du boîtier (11) par rapport à l'orifice de paroi (22), intérieur (111) dans lequel est disposé l'élément capteur (13).

7. Capteur de pression (1) selon la revendication 6, **caractérisé en ce que,** dans la région de l'orifice de paroi (22), le capteur de pression (1) est en contact avec le milieu (2) uniquement via le diaphragme (12).

8. Capteur de pression (1) selon la revendication 7, **caractérisé en ce qu'**une surface d'étanchéité (23) obture de manière hermétiquement étanche l'orifice de paroi (22) par rapport à l'environnement (40) ; et **en ce que** ladite surface d'étanchéité (23) est disposée entre la paroi de la chambre de mesure (21) et le diaphragme (12).

9. Capteur de pression (1) selon la revendication 6, **caractérisé en ce que,** dans la région de l'orifice de paroi (22), le capteur de pression (1) est en contact avec le milieu (2) via le boîtier (11) et via le diaphragme (12) et le boîtier (11) ainsi que le diaphragme (12) sont réalisés en ledit matériau métallique (30).

10. Capteur de pression (1) selon la revendication 9, **caractérisé en ce qu'**une surface d'étanchéité (23) obture de manière hermétiquement étanche l'orifice de paroi (22) par rapport à l'environnement (40) ; et **en ce que** ladite surface d'étanchéité (23) est disposée entre la paroi de la chambre de mesure (21) et le boîtier (11).

11. Capteur de pression (1) selon l'une quelconque des revendications 6 à 10, **caractérisé en ce que** le diaphragme (12) a une épaisseur de diaphragme (122) inférieure/égale à 150 µm ; et **en ce que** l'épaisseur du diaphragme (122) est supérieure à huit fois le diamètre moyen des grains (31) du matériau métallique (30) ; et **en ce qu'**une épaisseur de diaphragme (122) qui est supérieure à huit fois le diamètre moyen des grains (31) du matériau métallique (30) empêche la pénétration de l'hydrogène du milieu (2) à l'intérieur (111) du boîtier (11) et l'accumulation de l'hydrogène à l'intérieur (111) du boîtier (11).

12. Capteur de pression (1) selon l'une quelconque des revendications 1 à 11, **caractérisé en ce que** le boîtier (11) et/ou le diaphragme (12) comporte un revêtement (18) destiné à réduire la perméabilité à l'hydrogène du milieu (2), lequel revêtement (18) comprend de l'oxyde d'aluminium ou du carbure de titane.

13. Capteur de pression (1) selon la revendication 12, **caractérisé en ce que** le diaphragme (12) comporte une couche favorisant l'adhérence (19), laquelle couche favorisant l'adhérence (19) est appliquée entre le matériau métallique (30) du diaphragme (12) et le revêtement (18).

14. Capteur de pression (1) selon l'une quelconque des revendications 1 à 13, **caractérisé en ce que** l'élément capteur (13) est précontraint entre une base de précontrainte (16) et un manchon de précontrainte (17) ; et **en ce que** la base de précontrainte (16) et le manchon de précontrainte (17) sont constitués du matériau métallique (30).

15. Procédé pour la fabrication d'un capteur de pression (1) destiné à mesurer la pression (P₂) d'un milieu liquide ou gazeux (2), lequel milieu (2) se trouve dans une chambre de mesure (20) ; lequel capteur de pression (1) comprend un diaphragme (12) et un élément capteur (13), dans lequel le capteur de pression (1), dans l'état du capteur de pression (1) disposé sur la chambre de mesure (20), est conçu pour mesurer la pression (P₂) en continu à une température (T₁) jusqu'à 350 °C, pour protéger, par l'intermédiaire du diaphragme (12), l'élément capteur (13) contre un contact direct avec le milieu (2) et pour laisser la pression (P₂) agir sur l'élément capteur (13) via le diaphragme (12), lequel élément capteur (13) génère une valeur de mesure (M) sous l'effet de la pression (P₂) ; procédé **caractérisé par** un milieu contenant de l'hydrogène et comprenant les étapes suivantes :
la fourniture d'un matériau métallique (30) ayant un coefficient de dilatation thermique (α₃₀) inférieur/égal à 9,0*10⁻⁶ K⁻¹ ;
**caractérisé par**
l'affinage du grain du matériau métallique (30), dans lequel après l'affinage du grain le diamètre moyen des grains (31) du matériau (30) est inférieur à 20 µm ; et
la fabrication du diaphragme (12) à partir du matériau métallique (30) à grains fins.
